# EUROPÄISCHE PATENTANMELDUNG

(11) **EP 3 916 241 A1**
(43) Veröffentlichungstag der Anmeldung: **01.12.2021**
(21) Anmeldenummer: 20176373.7
(22) Anmeldetag: 25.05.2020
(51) Int. Cl.: F04D 29/42, F04D 29/68

(54) **STABILISATOR EINES VERDICHTERS**

(71) Anmelder: ABB Schweiz AG, 5400 Baden (CH)
(72) Erfinder: Rusch, Daniel Bernhard, 5430 Wettingen (CH); Mundinger, Gerd, 5430 Wettingen (CH)
(74) Vertreter: Zimmermann & Partner Patentanwälte mbB

(57) **Zusammenfassung**

Die Erfindung betrifft einen Stabilisator (10) eines Verdichters, insbesondere eines Radialverdichters oder Diagonalverdichters. Der Stabilisator (10) umfasst einen ersten ringförmigen Stabilisatorraum (12A), welcher einen Hauptströmungskanal (13) im Ansaugbereich eines Verdichterrades (21) umgibt. Ferner umfasst der Stabilisator (10) einen zweiten ringförmigen Stabilisatorraum (12B), welcher den ersten ringförmigen Stabilisatorraum (12A) umgibt. Ferner betrifft die Erfindung einen Verdichter, insbesondere einen Radialverdichter oder Diagonalverdichter, mit dem erfindungsgemäßen Stabilisator (10) sowie eine Strömungsmaschine, insbesondere Turbolader, mit dem Verdichter.

## Beschreibung

### TECHNISCHES GEBIET

Die Erfindung bezieht sich auf das Gebiet der Verdichter, insbesondere der Radialverdichter und Diagonalverdichter. Insbesondere betrifft die Erfindung einen Stabilisator am Verdichtereintritt zur Verbesserung der Kennfeldbreite und der Kennliniensteigung einer Verdichterstufe.

### TECHNISCHER HINTERGRUND

Abgasturbolader werden zur Leistungssteigerung von Brennkraftmaschinen, insbesondere Hubkolbenmotoren, eingesetzt. Dabei besitzt ein Abgasturbolader üblicherweise einen Radial- oder Diagonalverdichter und eine Radial- oder Axialturbine.

Der fahrbare Betriebsbereich von Radial- und Diagonalverdichtern ist hin zu kleineren Massenströmen durch die Pumpgrenze / Strömungsinstabilität limitiert: Beim Androsseln des Verdichters verschlechtern sich die Inzidenz-Winkel zunehmend, bis die Strömung ablöst und es zum Pumpen kommt. Der zulässige Inzidenz-Winkelbereich, bei welchem die Strömung noch anliegt, nimmt dabei mit steigender Strömungsmachzahl ab. Das heißt die Kennfeldbreite nimmt bei Stufen mit hohem Druckverhältnis und/oder hohem Schluckvermögen tendenziell ab.

Als Kennlinien-Stabilisierungs-Maßnahme kann dabei über der Radkontur des Verdichterrades, parallel zum Ansaugkanal, ein Bypass in Form eines Ringhohlraumes innerhalb des Verdichtergehäuses vorgesehen werden. Ein derartiger Bypass ist auch als Stabilisatorraum oder Rezirkulator bekannt. Durch die Verwendung eines Rezirkulators kann der Massenstrom am Verdichterradeintritt in Pumpgrenznähe künstlich erhöht werden. Aus dem Verdichterrad wird ein Teil des Massenstroms in den Seitenraum (Bypass) abgezweigt. Dieser Massenstrom weist eine starke Drallkomponente auf (in Drehrichtung des Impellers - Mitdrall). Dieser Mitdrall führt dazu, dass der Arbeitsumsatz im Verdichter reduziert wird, was zu flach verlaufenden Kennlinien in Pumpgrenznähe führt.

Flach verlaufende Kennlinien in Pumpgrenznähe können bei Anwendungen mit Druckpulsationen (z.B. bedingt durch die Ventilbewegung des aufgeladenen Verbrennungsmotors) zu unerwartetem Pumpen führen. Aus diesem Grund besteht die Anforderung einer Mindestdruckerhöhung zwischen Betriebspunkt und dem Pumpgrenzpunkt auf der Betriebsdrehzahllinie bereitzustellen. Diese Forderung kann bei Stufen mit hohem Druckverhältnis und konventionellem Bypass / Stabilisatorkanal kaum noch erfüllt werden - aufgrund des hohen Arbeitsumsatzes und des flachen Arbeitsziffer-Verlaufs über dem Massenstrom bei konstanter Drehzahl.

### KURZE DARSTELLUNG DER ERFINDUNG

Die Aufgabe der vorliegenden Erfindung besteht darin, einen Stabilisator eines Verdichters, insbesondere eines Radialverdichters oder Diagonalverdichters, bereitzustellen, der mindestens hinsichtlich einer der aus dem Stand der Technik bekannten Nachteile verbessert ist. Des Weiteren besteht die Aufgabe der vorliegenden Erfindung darin, einen verbesserten Verdichter und einen verbesserte Strömungsmaschine, insbesondere einen verbesserten Turbolader, bereitzustellen.

Zur Lösung der obengenannten Aufgaben wird ein Stabilisator eines Verdichters, insbesondere eines Radialverdichters oder Diagonalverdichters, gemäß dem unabhängigen Anspruch 1 bereitgestellt. Ferner werden ein Verdichter mit einem Stabilisator gemäß den hierein beschriebenen Ausführungsformen sowie eine Strömungsmaschine, insbesondere ein Turbolader, mit einem derartigen Verdichter bereitgestellt.

Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Stabilisator eines Verdichters, insbesondere eines Radialverdichters oder Diagonalverdichters bereitgestellt. Der Stabilisator umfasst einen ersten ringförmigen Stabilisatorraum. Der erste ringförmige Stabilisatorraum umgibt einen Hauptströmungskanal im Ansaugbereich eines Verdichterrades. Ferner umfasst der Stabilisator einen zweiten ringförmigen Stabilisatorraum. Der zweite ringförmige Stabilisatorraum umgibt den ersten ringförmigen Stabilisatorraum.

Somit wird vorteilhafterweise ein Stabilisator bereitgestellt, der eine Verbesserung der Kennfeldbreite und der Kennliniensteigung einer Verdichterstufe ermöglicht. Insbesondere kann durch den hierein beschriebenen Stabilisator mit einem ersten und einem zweiten ringförmigen Stabilisatorraum die Verteilung des Dralls sowie die Axialgeschwindigkeit der Strömung an der Impeller-Vorderkante und damit die Pumpgrenze günstig beeinflusst werden.

Gemäß einem zweiten Aspekt der Erfindung wird ein Verdichter, insbesondere ein Radialverdichter oder ein Diagonalverdichter, bereitgestellt der ein Verdichterrad und einen Stabilisator gemäß einer der hierein beschriebenen Ausführungsformen umfasst. Insbesondere umfasst das Verdichterrad im Bereich der Eintrittsöffnung eines ersten stromabliegenden Eintrittskanals des erste ringförmige Stabilisatorraums eine Anzahl N₁ an Verdichterradschaufeln, wobei eine Anzahl N₂ an ersten Strömungsleitelementen im ersten stromabliegenden Eintrittskanal N₂ ≥ 1.5×N₁ ist. Alternativ oder zusätzlich kann eine Anzahl N₃ an zweiten Strömungsleitelementen in einem zweiten stromabliegenden Eintrittskanal des zweite ringförmige Stabilisatorraums N₃≥ 1.5×N₁ sein.

Somit kann vorteilhafterweise ein Verdichter mit verbesserter Kennfeldbreite und Kennliniensteigung bereitgestellt werden.

Ein dritter Aspekt der Erfindung betrifft eine Strömungsmaschine, insbesondere einen Turbolader, mit einem Verdichter gemäß einer der hierein beschriebenen Ausführungsformen, so dass vorteilhafterweise eine Strömungsmaschine, insbesondere ein Turbolader, bereitgestellt wird, der gegenüber dem Stand der Technik verbessert ist.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigen:
- Figur 1: eine schematische Ansicht eines Stabilisators eines Verdichters gemäß dem Stand der Technik;
- Figur 2: eine schematische Ansicht eines Stabilisators eines Verdichters gemäß hierin beschriebenen Ausführungsformen;
- Figur 3a: eine schematische Ansicht eines Stabilisators gemäß einer weiteren hierin beschriebenen Ausführungsform, in welcher eine radial außen liegende Begrenzung des zweiten ringförmigen Stabilisatorraums durch eine Einsatzteil gebildet wird;
- Figur 3b: eine schematische Ansicht eines Stabilisators gemäß einer weiteren hierin beschriebenen Ausführungsform, in welcher eine radial außen liegende Begrenzung des zweiten ringförmigen Stabilisatorraums durch ein inneres Verdichtergehäuse gebildet wird; und
- Figuren 4 bis 7: schematische Ansichten eines Stabilisators gemäß weiteren hierin beschriebenen Ausführungsformen.

### DETAILLIERTE BESCHREIBUNG DER FIGUREN

Im Folgenden wird nun ausführlich auf die verschiedenen Ausführungsformen eingegangen, von denen in jeder Abbildung ein oder mehrere Beispiele dargestellt sind. Jedes Beispiel dient der Erläuterung und ist nicht als Einschränkung zu verstehen. Beispielsweise können Merkmale, die als Teil einer Ausführungsform dargestellt oder beschrieben sind, auf oder in Verbindung mit jeder anderen Ausführungsform verwendet werden, um eine weitere Ausführungsform zu erhalten. Es ist beabsichtigt, dass die vorliegende Offenlegung solche Modifikationen und Variationen einschließt.

In der folgenden Beschreibung der Zeichnungen beziehen sich die gleichen Referenznummern auf die gleichen oder ähnlichen Komponenten. Im Allgemeinen werden nur die Unterschiede in Bezug auf die einzelnen Ausführungsformen beschrieben. Sofern nicht anders angegeben, kann sich die Beschreibung eines Teils oder Aspekts in einer Ausführungsform auch auf ein entsprechendes Teil oder einen entsprechenden Aspekt in einer anderen Ausführungsform beziehen.

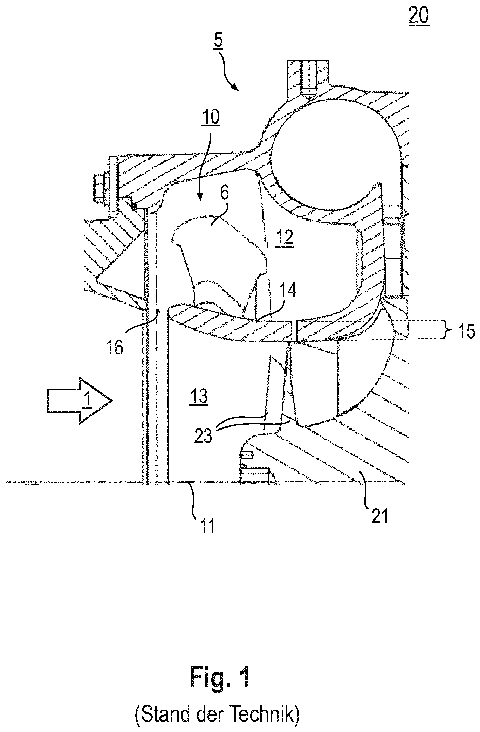

Figur 1 zeigt eine schematische Ansicht eines Stabilisators 10 gemäß dem Stand der Technik. Insbesondere zeigt Figur 1 einen entlang der Rotationsachse 11 des Verdichterrades 21 geführten Schnitt durch ein Gehäuse eines Verdichters 20, insbesondere eines Radialverdichters, wie er etwa zum Verdichten von Luft in Abgasturboladern eingesetzt wird. Das Verdichterrad 21 umfasst Verdichterradschaufeln 23. In dem Verdichtergehäuse 5 ist ein Stabilisatorraum 12 angeordnet. Der Stabilisatorraum 12 ist über einen Eintrittskanal 15 und eine Austrittsöffnung 16 mit dem Hauptströmungskanal 13 verbunden. Der Stabilisatorraum 12 ist gegenüber dem Hauptströmungskanal 13 mittels eines Ringstegs 14 abgegrenzt. In dem Stabilisatorraum 12 sind Halterippen 6 angeordnet, die den Ringsteg 14 mit dem Verdichtergehäuse verbinden.

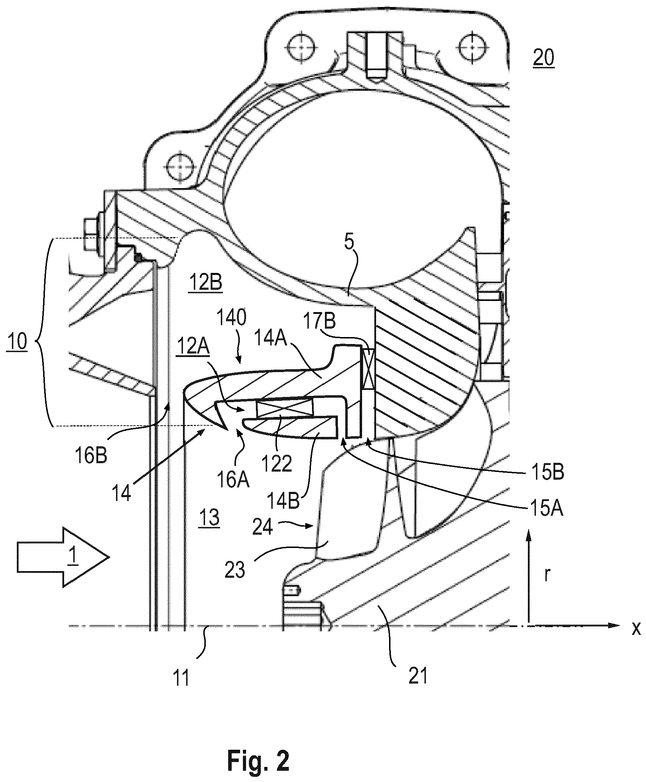

Mit Bezugnahme auf die Figuren 2 bis 7 werden Ausführungsformen eines Stabilisators 10 eines Verdichters 20 gemäß der vorliegenden Offenbarung beschrieben. Der Verdichter kann ein Radialverdichter oder eine Diagonalverdichter sein. Wie in Figur 2 gezeigt ist, ist der Stabilisator 10 typischerweise am Verdichtereintritt angeordnet.

Gemäß einer Ausführungsform, die mit anderen hierin beschriebenen Ausführungsformen kombiniert werden kann, umfasst der Stabilisator 10 einen ersten ringförmigen Stabilisatorraum 12A, wie es beispielhaft in Figur 2 gezeigt ist. Der erste ringförmige Stabilisatorraum 12A umgibt einen Hauptströmungskanal 13 im Ansaugbereich eines Verdichterrades 21. Ferner umfasst der Stabilisator 10 einen zweiten ringförmigen Stabilisatorraum 12B. Der zweite ringförmige Stabilisatorraum 12B umgibt den ersten ringförmigen Stabilisatorraum 12A. Der erste ringförmige Stabilisatorraum 12A und/oder der zweite ringförmige Stabilisatorraum 12B können rotationssymmetrisch ausgebildet sein.

In diesem Zusammenhang sei angemerkt, dass in der vorliegenden Offenbarung unter einem "Stabilisatorraum" insbesondere ein Raum im Verdichtereintrittsbereich zu verstehen ist, der konfiguriert ist, um eine Kennfeldbreite einer Verdichterstufe zu verbessern. Insbesondere können der ersten ringförmige Stabilisatorraum 12A und der zweite ringförmigen Stabilisatorraum 12B als Rezirkulationsräume ausgebildet sein.

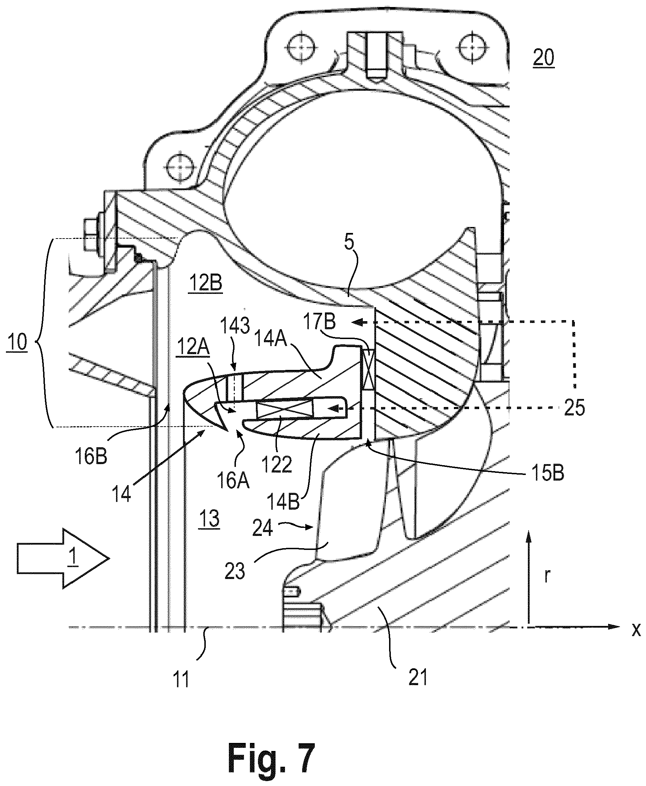

Gemäß einer Ausführungsform, die mit anderen hierin beschriebenen Ausführungsformen kombiniert werden kann, ist zwischen dem ersten ringförmigen Stabilisatorraum 12A und dem zweiten ringförmigen Stabilisatorraum 12B ein ringförmiges Trennelement 140 angeordnet. Das Trennelement 140 grenzt den ersten ringförmigen Stabilisatorraum 12A von dem zweiten ringförmigen Stabilisatorraum 12B zumindest teilweise ab. Unter "einer zumindest teilwesen Abgrenzung" ist zu verstehen, dass das Trennelement 140 eine oder mehrere Verbindungsöffnungen 143 aufweisen kann, mittels welchen der erste ringförmige Stabilisatorraum 12A mit dem zweiten ringförmigen Stabilisatorraum 12B verbunden sein kann, wie es beispielhaft in Figur 7 dargestellt ist.

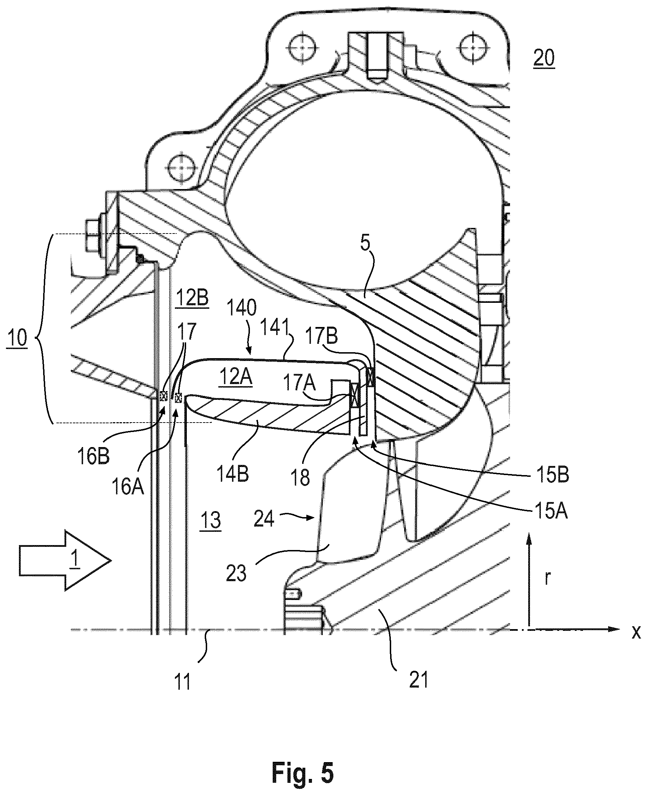

Gemäß einer Ausführungsform, die mit anderen hierin beschriebenen Ausführungsformen kombiniert werden kann, ist das ringförmige Trennelement 140 durch einen ersten Ringsteg 14A gebildet, wie es beispielhaft in Figur 2 dargestellt ist. Alternativ kann das ringförmige Trennelement 140 durch ein Trennblech 141 gebildet sein, wie es beispielhaft in Figur 5 dargestellt ist.

In diesem Zusammenhang sei darauf hingewiesen, dass das ringförmige Trennelement 140 ausgebildet ist um eine Abgrenzung zwischen dem ersten ringförmigen Stabilisatorraum 12A und dem zweiten ringförmigen Stabilisatorraum 12B bereitzustellen, so dass eine Strömung im ersten ringförmigen Stabilisatorraum 12A im Wesentlichen von einer Strömung im zweiten ringförmigen Stabilisatorraum 12B getrennt werden kann. Mit anderen Worten, durch das hierin beschriebene ringförmige Trennelement 140 können vorteilhafterweise zwei unterschiedliche Strömungen bereitgestellt, nämlich eine erste Strömung im ersten ringförmigen Stabilisatorraum 12A und eine zweite Strömung im zweiten ringförmigen Stabilisatorraum 12B.

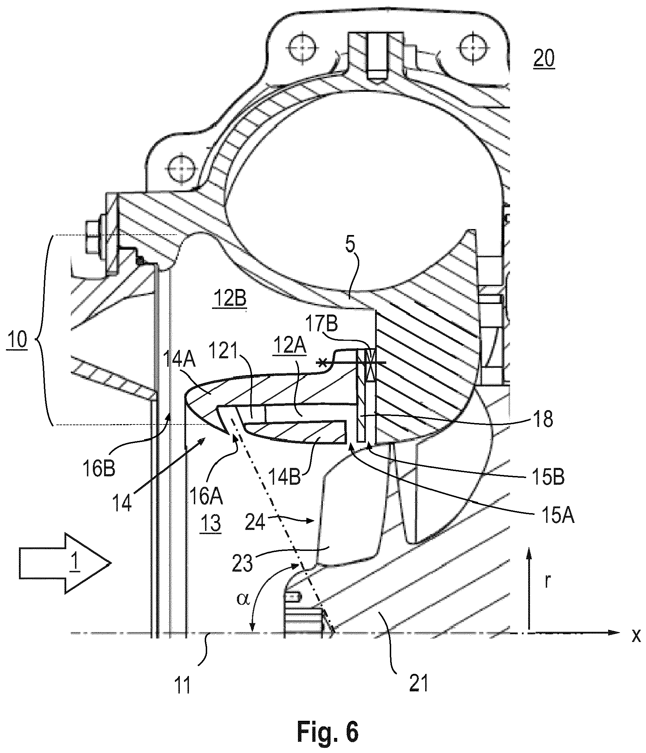

Gemäß einer Ausführungsform, die mit anderen hierin beschriebenen Ausführungsformen kombiniert werden kann, sind in dem ersten ringförmigen Stabilisatorraum 12A eine oder mehrere Streben 121 angeordnet, wie es beispielhaft in Figur 6 dargestellt ist. Die Streben können durch Bohren, Fräsen oder Gießen hergestellt sein.

Alternative oder zusätzlich können im ersten ringförmigen Stabilisatorraum 12A eine oder mehrere Schaufeln 122 angeordnet sein, wie es beispielhaft in den Figuren 2, 3a, 3b, und 7 dargestellt ist.

Gemäß einer Ausführungsform, die mit anderen hierin beschriebenen Ausführungsformen kombiniert werden kann, ist der zweite ringförmige Stabilisatorraum 12B schaufellos. Insbesondere kann der zweite ringförmige Stabilisatorraum 12B schaufellos und strebenlos sein. Mit anderen Worten, optional sind in dem zweiten ringförmigen Stabilisatorraum 12B keine Schaufeln, insbesondere keine Strömungsleitschaufeln, und/oder keine Streben angeordnet.

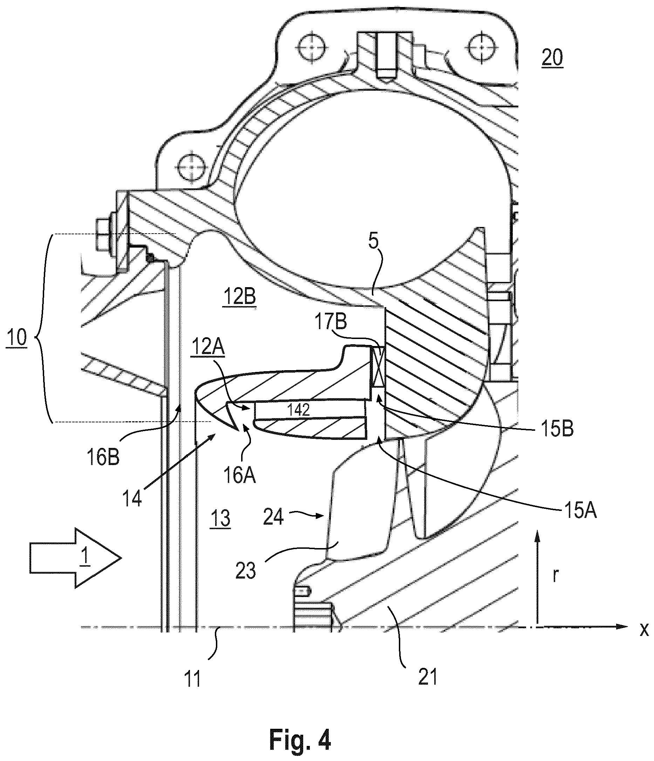

Gemäß einer Ausführungsform, die mit anderen hierin beschriebenen Ausführungsformen kombiniert werden kann, steht der erste ringförmige Stabilisatorraum 12A über einen ersten stromabliegenden Eintrittskanal 15Aund eine erste stromaufliegende Austrittsöffnung 16A mit dem Hauptströmungskanal 13 in Verbindung, wie es beispielhaft in den Figuren 2, 3a, 3b, 5 und 6 dargestellt ist. In diesem Zusammenhang wird darauf hingewiesen, dass der erste stromabliegende Eintrittskanal 15A auch Eintrittskanal für den zweiten ringförmigen Stabilisatorraum 12B sein kann oder in den zweiten stromabliegenden Eintrittskanal 15B münden kann, wie es beispielhaft in Figur 4 dargestellt ist.

In der vorliegenden Offenbarung ist unter dem Begriff "Eintrittskanal" ein Kanal zu verstehen, der als Strömungseintrittskanal in einen hierin beschriebenen Stabilisatorraum dient.

In der vorliegenden Offenbarung beziehen sich die Begriffe "stromabliegend" und "stromaufliegend" auf die Hauptströmung im Hauptströmungskanal im Ansaugbereich eines Verdichterrades. Zum besseren Verständnis ist die Hauptströmungsrichtung 1 in den Figuren eingezeichnet.

Gemäß einem Beispiel kann der erste Eintrittskanal 15A des ersten Stabilisatorraums 12A stromab zu einer Eintrittskante 24 des Verdichterrades 21 angeordnet sein, wie es in Figur 2 gezeigt ist. Die erste Austrittsöffnung 16A des ersten Stabilisatorraums 12A ist typischerweise stromauf der Eintrittskante 24 des Verdichterrades 21 angeordnet.

Auf ähnliche Weise, ist typischerweise der zweite Eintrittskanal 15B des zweiten Stabilisatorraums 12B stromab zur Eintrittskante 24 des Verdichterrades 21 angeordnet. Insbesondere kann der zweite Eintrittskanal 15B stromab des ersten Eintrittskanals 15A angeordnet sein. Die zweite Austrittsöffnung 16B des zweiten Stabilisatorraums 12 B ist typischerweise stromauf der Eintrittskante 24 des Verdichterrades 21 angeordnet. Insbesondere kann die zweite Austrittsöffnung 16B des zweiten Stabilisatorraums 12 B stromauf der erste Austrittsöffnung 16A des ersten Stabilisatorraums 12 A sein.

Gemäß einer Ausführungsform, die mit anderen hierin beschriebenen Ausführungsformen kombiniert werden kann, ist in der ersten Austrittsöffnung 16A und/oder in der zweiten Austrittsöffnung 16B mindestens ein Strömungsleitelement 17 angeordnet, wie es schematisch in Fig. 5 durch die gestrichelten Elemente angedeutet ist. Das mindestens eine Strömungsleitelement 17 in der ersten Austrittsöffnung 16A und/oder in der zweiten Austrittsöffnung 16B kann analog zu dem mindestens einen ersten Strömungsleitelement 17A und/oder analog zu dem mindestens einen zweiten Strömungsleitelement 17B konfiguriert sein, wie es hierin beschrieben ist.

Gemäß einer Ausführungsform, die mit anderen hierin beschriebenen Ausführungsformen kombiniert werden kann, erstreckt sich der erste stromabliegende Eintrittskanal 15A und/oder der zweiten stromabliegende Eintrittskanal 15B im Wesentlichen in radialer Richtung, wie es beispielshaft in Figur 2 dargestellt ist.

In der vorliegenden Offenbarung ist unter dem Begriff "im Wesentlichen radial" ein Winkelbereich von ± 45° oder geringer, insbesondere von ± 25° oder geringer, relativ zur radialen Richtung r zu verstehen. Wie es beispielhaft in Fig. 2 dargestellt ist erstreckt sich die radiale Richtung r senkrecht zur zentralen Achse 11. Gemäß einem Beispiel ist unter "im Wesentlichen radial" ein Winkelbereich von ±10° oder geringer relativ zur radialen Richtung r zu verstehen.

Gemäß einer Ausführungsform, die mit anderen hierin beschriebenen Ausführungsformen kombiniert werden kann, ist die erste stromaufliegende Austrittsöffnung 16A zur axialen Richtung x des Hauptströmungskanals 13 um einen Winkel α geneigt, wie es beispielhaft in Figur 6 dargestellt ist. Typischerweise ist der Winkel α aus einem Bereich von 20° ≤ α ≤ 90°ausgewählt.

Gemäß einer Ausführungsform, die mit anderen hierin beschriebenen Ausführungsformen kombiniert werden kann, ist in dem ersten stromabliegenden Eintrittskanal 15A mindestens ein erstes Strömungsleitelement 17A angeordnet, wie es beispielhaft in Figur 5 dargestellt ist. Mit anderen Worten, in dem ersten stromabliegenden Eintrittskanal 15A können ein oder mehrere erste Strömungsleitelemente 17A angeordnet sein. In dem Fall, dass mehrere erste Strömungsleitelemente 17A in dem ersten stromabliegenden Eintrittskanal 15A angeordnet sind, können die mehreren ersten Strömungsleitelemente 17A umlaufend, insbesondere konzentrisch, um die zentrale Achse 11 des Hauptströmungskanals 13 bzw. um die Rotationsachse des Verdichterrades angeordnet sein.

Gemäß einer Ausführungsform, die mit anderen hierin beschriebenen Ausführungsformen kombiniert werden kann, weist das mindestens eine oder die mehreren ersten Strömungsleitelemente 17A einen Zentriersitz auf, der ausgebildet ist, um das eine oder die mehreren ersten Strömungsleitelemente 17A in dem ersten stromabliegenden Eintrittskanal 15A, insbesondere konzentrisch, um die zentralen Achse 11 des Hauptströmungskanals 13 anzuordnen.

Gemäß einer Ausführungsform, die mit anderen hierin beschriebenen Ausführungsformen kombiniert werden kann, weist das mindestens eine oder die mehreren zweiten Strömungsleitelemente 17B einen Zentriersitz auf, der ausgebildet ist, um das eine oder die mehreren zweiten Strömungsleitelemente 17B in dem zweiten stromabliegenden Eintrittskanal 15B, insbesondere konzentrisch, um die zentralen Achse 11 des Hauptströmungskanals 13 anzuordnen.

Der Zentriersitz kann beispielsweise mittels einem oder mehreren Zentrierelementen, einem oder mehreren Zentrierstiften, oder einem Zentrierrand an den zu zentrierenden Bauteilen realisiert werden.

In diesem Zusammenhang sei darauf hingewiesen, dass an dem Ringelement 14 und/oder an der Ringplatte 18 und/oder an dem Verdichtergehäuse 5 und/oder an dem Einsatzteil 22 und/oder an dem inneren Verdichtergehäuse 20A ein oder mehrere Zentrierabsätze, z.B. konisch oder zylindrisch, vorgesehen sein können um die jeweiligen, mit einander in Verbindung stehenden Bauteile zu zentrieren.

Gemäß einer Ausführungsform, die mit anderen hierin beschriebenen Ausführungsformen kombiniert werden kann, steht der zweite ringförmige Stabilisatorraum 12B über einen zweiten stromabliegenden Eintrittskanal 15B und eine zweite stromaufliegende Austrittsöffnung 16B mit dem Hauptströmungskanal 13 in Verbindung, wie es beispielhaft in den Figuren 2, 3a , 3b, 4, 5, 6 und 7 dargestellt ist.

Gemäß einer Ausführungsform, die mit anderen hierin beschriebenen Ausführungsformen kombiniert werden kann, ist in dem zweiten stromabliegenden Eintrittskanal 15B mindestens ein zweites Strömungsleitelement 17B angeordnet, wie es beispielhaft in den Figuren 2, 3a , 3b, 4, 5, 6 und 7 dargestellt ist. Mit anderen Worten, in dem zweiten stromabliegenden Eintrittskanal 15B können ein oder mehrere zweite Strömungsleitelemente 17B angeordnet sein. In dem Fall, dass mehrere zweite Strömungsleitelemente 17B in dem zweitem stromabliegenden Eintrittskanal 15B angeordnet sind, können die mehreren zweiten Strömungsleitelemente 17B umlaufend, insbesondere konzentrisch, um die zentrale Achse 11 des Hauptströmungskanals 13 bzw. um die Rotationsachse des Verdichterrades angeordnet sein.

Gemäß einer Ausführungsform, die mit anderen hierin beschriebenen Ausführungsformen kombiniert werden kann, sind das mindestens eine erste Strömungsleitelement 17A und/oder das mindestens eine zweite Strömungsleitelement 17B derart ausgebildet und angeordnet, um ein durchströmbares Umlenkgitter bereitzustellen. Beispielsweise kann das Umlenkgitter derart ausgebildet und angeordnet sein, um ein im Wesentlichen radial durchströmbares Umlenkgitter bereitzustellen.

Das mindestens eine erste Strömungsleitelement 17A und/oder das mindestens eine zweite Strömungsleitelement 17B können beispielsweise in Form einer Spirale ausgebildet sein. Typischerweise umfasst das mindestens eine erste Strömungsleitelement 17A und/oder das mindestens eine zweite Strömungsleitelement 17B mehrere Strömungsleitelemente, die umlaufend um eine zentrale Achse 11 des Hauptströmungskanals 13 angeordnet sind. Insbesondere können die mehreren ersten Strömungsleitelemente 17A und/oder die mehreren zweiten Strömungsleitelemente 17B konzentrisch um die zentrale Achse 11 des Hauptströmungskanals 13 angeordnet sein.

Gemäß einer Ausführungsform, die mit anderen hierin beschriebenen Ausführungsformen kombiniert werden kann, sind der erste stromabliegenden Eintrittskanal 15A und der zweite stromabliegende Eintrittskanal 15B mittels einer sich im Wesentlichen radial erstreckenden Ringplatte 18 voneinander getrennt, wie es beispielhaft in Figur 6 gezeigt ist. Das mindestens eine zweite Strömungsleitelemente 17B kann integral (einteilig) mit der Ringplatte 18 ausgebildet sein. Alternativ oder zusätzlich kann das mindestens eine erste Strömungsleitelement 17A integral (einteilig) mit der Ringplatte 18 ausgebildet sein.

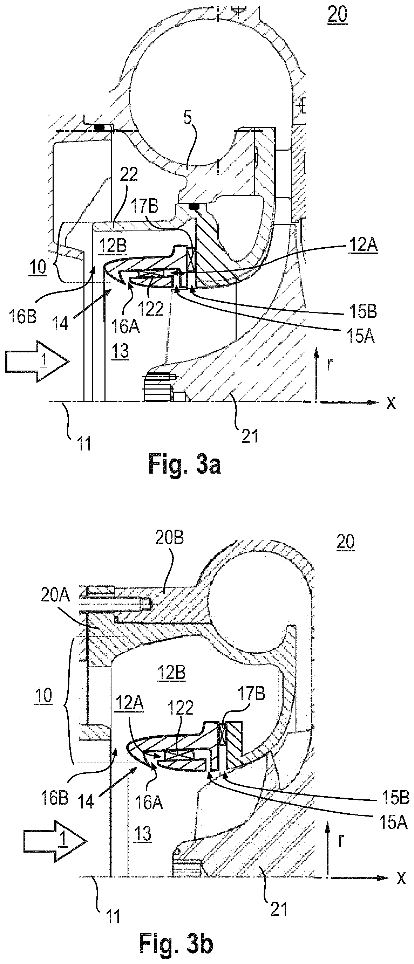

Gemäß einer Ausführungsform, die mit anderen hierin beschriebenen Ausführungsformen kombiniert werden kann, weist der zweite ringförmige Stabilisatorraum 12B eine radial außen liegende Begrenzung auf, die durch einen Teil eines Verdichtergehäuses 5 gebildet wird, wie es beispielhaft in Figur 2 dargestellt ist. Alternativ kann die radial außen liegende Begrenzung des zweiten ringförmigen Stabilisatorraums 12B durch ein Einsatzteil 22 gebildet werden, das in das Verdichtergehäuse 5 eingesetzt ist, wie es beispielhaft in Figur 3a gezeigt ist. Gemäß einer weiteren Alternative, kann die radial außen liegende Begrenzung des zweiten ringförmigen Stabilisatorraums 12B durch ein inneres Verdichtergehäuse 20A gebildet sein, es beispielhaft in Figur 3b dargestellt ist.

Gemäß einer Ausführungsform, die mit anderen hierin beschriebenen Ausführungsformen kombiniert werden kann, weist der erste ringförmige Stabilisatorraum 12A eine radial innen liegende Begrenzung auf. Die radial innen liegende Begrenzung wird typischerweise durch einen zweiten Ringsteg 14B gebildet, wie es beispielhaft in den Figuren 2, 5 und 6 und 7 dargestellt ist. Der zweite Ringsteg 14B grenzt den ersten ringförmigen Stabilisatorraum 12A gegenüber dem Hauptströmungskanal 13 ab.

Gemäß einer Ausführungsform, die mit anderen hierin beschriebenen Ausführungsformen kombiniert werden kann, wird der erste ringförmigen Stabilisatorraum 12A durch eine Ringnut 142 bereitgestellt, die in einem Ringelement 14 angeordnet ist, das den Hauptströmungskanal 13 umgibt, wie es beispielweise in Figur 4 dargestellt ist. Das Ringelement 14 kann als Dreh-Fräs-Bauteil oder Dreh-Bohr-Bauteil ausgeführt sein.

Gemäß einer Ausführungsform, die mit anderen hierin beschriebenen Ausführungsformen kombiniert werden kann, ist der ersten Ringsteg 14A und/oder die Ringplatte 18 mit dem Verdichtergehäuse 5 über mindestens ein Strömungsleitelement, insbesondere über mindestens ein zweites Strömungsleitelement 17B im zweiten Eintrittskanal 15B, verbunden, beispielsweise mittels einer Verschraubung, wie es beispielhaft in Figur 6 dargestellt ist. Die Verschraubung kann sich durch das mindestens eine Strömungsleitelement erstrecken. Es sei angemerkt, dass die Verschraubungen auch auf andere Weise ausgeführt werden können, d.h. so dass sie sich nicht durch das mindestens eine Strömungsleitelemente erstecken. Alternativ oder zusätzlich können auch andere Verdingungsarten wie zum Beispiel Verstiften, Schrumpfen oder Klemmen verwendet werden.

Alternativ, kann der ersten Ringsteg 14A und/oder die Ringplatte 18 mit dem innere Verdichtergehäuse 20A oder dem Einsatzteil 22 über mindestens ein Strömungsleitelement, insbesondere über mindestens ein zweites Strömungsleitelement 17B im zweiten Eintrittskanal 15B, verbunden sein

Gemäß einer Ausführungsform, die mit anderen hierin beschriebenen Ausführungsformen kombiniert werden kann, umfasst der Stabilisator 10 ferner eine externe Gaszuführung 25. Beispielsweise kann die Gaszuführung 25 mit dem ersten ringförmigen Stabilisatorraum 12A und/oder mit dem zweiten ringförmigen Stabilisatorraum 12B verbunden sein, wie es in Figur 7 schematisch dargestellt ist. Zum Beispiel kann die Gaszuführung eine Sperrluftzuführung oder eine Premix-Gaszuführung sein.

Gemäß einem zweiten Aspekt der vorliegenden Offenbarung wird ein Verdichter 20, insbesondere ein Radialverdichter oder ein Diagonalverdichter, bereitgestellt der ein Verdichterrad 21 und einen Stabilisator 10 gemäß einer der hierein beschriebenen Ausführungsformen umfasst. Gemäß einer Ausführungsform, die mit anderen hierin beschriebenen Ausführungsformen kombiniert werden kann, umfasst das Verdichterrad 21 im Bereich der Eintrittsöffnung des ersten stromabliegenden Eintrittskanals 15A eine Anzahl N₁ an Verdichterradschaufeln 23. Eine Anzahl N₂ an ersten Strömungsleitelementen 17A im ersten stromabliegenden Eintrittskanal 15A ist N₂ ≥ 1.5×N₁. Alternativ oder zusätzlich kann eine Anzahl N₃ an zweiten Strömungsleitelementen 17B in einem zweiten stromabliegenden Eintrittskanals 15B N₃≥ 1.5×N₁ sein. Eine derartige Wahl der Anzahl N₂ und/oder Anzahl N₃ ist vorteilhaft um die Geräusch- und Schwingungsentwicklung im Betrieb des Verdichters zu reduzieren.

Ein dritter Aspekt der Erfindung betrifft eine Strömungsmaschine, insbesondere einen Turbolader mit einem Verdichter gemäß einer der hierein beschriebenen Ausführungsformen, so dass vorteilhafterweise eine Strömungsmaschine, insbesondere einen Turbolader, bereitgestellt wird, der gegenüber dem Stand der Technik verbessert ist.

### BEZUGZEICHENLISTE

1 Hauptströmungsrichtung
5 Verdichtergehäuse
6 Strebe im Stabilisator gemäß dem Stand der Technik
10 Stabilisator
11 zentrale Achse / Rotationsachse des Verdichterrades
12 ringförmiger Stabilisatorraum gemäß dem Stand der Technik
12A erster ringförmiger Stabilisatorraum
12B zweiter ringförmiger Stabilisatorraum
121 mehrere Streben des ersten ringförmigen Stabilisatorraums
122 mehrere Schaufeln des ersten ringförmigen Stabilisatorraums
13 Hauptströmungskanal
14 Ringsteg/ Ringelement
14A erster Ringsteg
14B zweiter Ringsteg
140 ringförmiges Trennelement
141 Trennblech
142 Ringnut
143 Verbindungsöffnung im ringförmigen Trennelement zwischen erstem und zweitem ringförmigen Stabilisatorraum,
15 Eintrittskanal gemäß dem Stand der Technik
15A erster Eintrittskanal des ersten Stabilisatorraums
15B zweiter Eintrittskanal des zweiten Stabilisatorraums
16 Austrittsöffnung gemäß dem Stand der Technik
16A erste Austrittsöffnung des ersten Stabilisatorraums
16B zweite Austrittsöffnung des zweiten Stabilisatorraums
17 mindestens ein Strömungsleitelement in der ersten Austrittsöffnung
16A und/oder in der zweiten Austrittsöffnung 16B
17A mindestens ein erstes Strömungsleitelement im ersten Eintrittskanal
17B mindestens ein zweites Strömungsleitelement im zweiten Eintrittskanal
18 im Wesentlichen in radialer Richtung erstreckende Ringplatte
20 Verdichter
20A Inneres Verdichtergehäuse
20B Äußeres Verdichtergehäuse
21 Verdichterrad
22 Einsatzteil
23 Verdichterradschaufeln
24 Eintrittskante des Verdichterrades
25 externe Sperrluftzuführung
r radiale Richtung
x axiale Richtung
α Neigungswinkel der ersten stromaufliegende Austrittsöffnung 16A relativ zur axialen Richtung x des Hauptströmungskanals

## Patentansprüche

1. Stabilisator (10) eines Verdichters, insbesondere eines Radialverdichters oder Diagonalverdichters, umfassend:
- einen ersten ringförmigen Stabilisatorraum (12A), welcher einen Hauptströmungskanal (13) im Ansaugbereich eines Verdichterrades (21) umgibt; und
- einen zweiten ringförmigen Stabilisatorraum (12B), welcher den ersten ringförmigen Stabilisatorraum (12A) umgibt.

2. Stabilisator (10) nach Anspruch 1, wobei zwischen dem ersten ringförmigen Stabilisatorraum (12A) und dem zweiten ringförmigen Stabilisatorraum (12B) ein ringförmiges Trennelement (140) angeordnet ist, welches den ersten ringförmigen Stabilisatorraum (12A) von dem zweiten ringförmigen Stabilisatorraum (12B) zumindest teilweise abgrenzt.

3. Stabilisator (10) nach Anspruch 1 oder 2, wobei in dem ersten ringförmigen Stabilisatorraum (12A) eine oder mehrere Streben (121) und/oder eine oder mehrere Schaufeln (122) angeordnet sind.

4. Stabilisator (10) nach einem der Ansprüche 1 bis 3, wobei der zweite ringförmige Stabilisatorraum (12B) schaufellos, insbesondere schaufellos und strebenlos, ist.

5. Stabilisator (10) nach einem der Ansprüche 1 bis 4, wobei der erste ringförmige Stabilisatorraum (12A) über einen ersten stromabliegenden Eintrittskanal (15A) und eine erste stromaufliegende Austrittsöffnung (16A) mit dem Hauptströmungskanal (13) in Verbindung steht.

6. Stabilisator (10) nach Anspruch 5, wobei die erste stromaufliegende Austrittsöffnung (16A) zur axialen Richtung x des Hauptströmungskanals (13) um einen Winkel α geneigt ist, wobei der Winkel 20° ≤ α ≤ 90° ist.

7. Stabilisator (10) nach Anspruch 5 oder 6, wobei in dem ersten stromabliegenden Eintrittskanal (15A) mindestens ein erstes Strömungsleitelement (17A) angeordnet ist.

8. Stabilisator (10) nach einem der Ansprüche 1 bis 7, wobei der zweite ringförmige Stabilisatorraum (12B) über einen zweiten stromabliegenden Eintrittskanal (15B) und eine zweite stromaufliegende Austrittsöffnung (16B) mit dem Hauptströmungskanal (13) in Verbindung steht.

9. Stabilisator (10) nach Anspruch 8, wobei in dem zweiten stromabliegenden Eintrittskanal (15B) mindestens ein zweites Strömungsleitelement (17B) angeordnet ist.

10. Stabilisator (10) nach Anspruch 5 und 8, oder nach Anspruch 5 und 8 in Kombination mit einem der Ansprüche 6, 7 oder 9, wobei der erste stromabliegenden Eintrittskanal (15A) und der zweite stromabliegende Eintrittskanal (15B) mittels einer sich im Wesentlichen radial erstreckenden Ringplatte (18) voneinander getrennt sind, insbesondere wobei das mindestens eine zweite Strömungsleitelemente (17B) integral mit der Ringplatte (18) ausgebildet sind.

11. Stabilisator (10) nach einem der Ansprüche 2 bis 10, wobei das ringförmige Trennelement (140) durch einen ersten Ringsteg (14A) oder ein Trennblech (141) gebildet wird.

12. Stabilisator (10) nach einem der Ansprüche 1 bis 11, wobei der zweite ringförmige Stabilisatorraum (12B) eine radial außen liegende Begrenzung aufweist, die durch einen Teil eines Verdichtergehäuses (5), oder ein Einsatzteil (22), oder ein inneres Verdichtergehäuse (20A) gebildet wird.

13. Stabilisator (10) nach einem der Ansprüche 1 bis 12, wobei der erste ringförmige Stabilisatorraum (12A) eine radial innen liegende Begrenzung aufweist, die durch einen zweiten Ringsteg (14B) gebildet wird.

14. Stabilisator (10) nach einem der Ansprüche 1 bis 13, wobei der erste ringförmige Stabilisatorraum (12A) durch eine Ringnut (142) bereitgestellt wird, die in einem Ringelement (14) angeordnet ist, das den Hauptströmungskanal (13) umgibt.

15. Stabilisator (10) nach einem der Ansprüche 1 bis 14, ferner umfassend eine externe Gaszuführung (25), die mit dem ersten ringförmigen Stabilisatorraum (12A) und/oder mit dem zweiten ringförmigen Stabilisatorraum 12B verbunden ist.

16. Verdichter (20), insbesondere Radialverdichter oder Diagonalverdichter, mit einem Verdichterrad (21) und einem Stabilisator (10) gemäß einem der Ansprüche 1 bis 14, insbesondere wobei das Verdichterrad (21) im Bereich der Eintrittsöffnung des ersten stromabliegenden Eintrittskanals (15A) eine Anzahl N₁ an Verdichterradschaufeln (23) umfasst, und wobei eine Anzahl N₂ an ersten Strömungsleitelementen (17A) im ersten stromabliegenden Eintrittskanal (15A) N₂ ≥ 1.5×N₁ ist, und/oder insbesondere wobei eine Anzahl N₃ an zweiten Strömungsleitelementen (17B) in einem zweiten stromabliegenden Eintrittskanals (15B) N₃ ≥ 1.5×N₁ ist.

17. Strömungsmaschine, insbesondere Turbolader, mit einem Verdichter (20) nach Anspruch 16.
